Europäisches Patentamt

European Patent Office

Office européen des brevets

(19)

(11) Numéro de publication: **0 069 670**

**A1**

(12) **DEMANDE DE BREVET EUROPEEN**

(21) Numéro de dépôt: **82401261.1**

(22) Date de dépôt: **06.07.82**

(51) Int. Cl.³: **F 16 K 3/18**
**F 16 K 3/316**

(30) Priorité: **07.07.81 FR 8113725**

(43) Date de publication de la demande:
**12.01.83 Bulletin 83/2**

(84) Etats contractants désignés:
**AT BE CH DE GB IT LI LU NL SE**

(71) Demandeur: **Albin, Alexis**
**13, rue de Bigorre**
**F-31220 Cazeres-sur-Garonne(FR)**

(72) Inventeur: **Albin, Alexis**
**13, rue de Bigorre**
**F-31220 Cazeres-sur-Garonne(FR)**

(74) Mandataire: **Morelle, Guy Georges Alain**
**Cabinet SCOPI 1, Avenue de Rangueil**
**F-31400 Toulouse(FR)**

(54) **Vanne comportant des excentriques montés sur sa tige à commande manuelle.**

(57) L'invention concerne un organe appelé vanne et destiné à régler et/ou à isoler l'écoulement fluide dans une conduite.

Cette vanne (I) comprend:

— un corps creux constitué d'un fût (1) de section rectangulaire, fermé à sa base par un fond (2) et à son sommet par un couvercle (3),

— une tubulure d'entrée (4a) et une tubulure de sortie (4b) formant sièges et ménagées dans les parois longitudinales (1a) et (1b) dudit fût, dans le prolongement l'une de l'autre,

— et un obturateur mobile comprenant deux opercules (5a) et (5b) constitués chacun d'un plateau rectangulaire (13) monté, au moyen de chapes (14) et (15), en libre rotation autour de deux excentriques inférieur (6) et supérieur (7) accouplés à une tige (8) à commande manuelle (12) dont la partie basse est montée tourillonnante (flèche R) au centre d'un palier-support (10) formé d'une pièce parallélépipédique s'étendant en travers du fût (1).

La vanne (I) permet de réguler les écoulements de fluide à faible pression et à gros débits, dans les conduites.

VANNE COMPORTANT DES EXCENTRIQUES MONTES SUR SA TIGE A COMMANDE MANUELLE

0069670

La présente invention a trait aux organes plus communément appelés vannes et destinés à régler et/ou à isoler les écoulements de fluide dans des conduites.

Plus précisemment, l'invention concerne les vannes du type de celles comprenant :

 - un corps creux constitué d'un fût fermé à sa base par un fond et à son sommet par un couvercle,

 - une tubulure d'entrée et une tubulure de sortie formant sièges et ménagées dans les parois dudit fût, dans le prolongement l'une de l'autre,

 - et un obturateur mobile comportant deux opercules parallèles constitués de plateaux montés en libre rotation autour de deux excentriques inférieur et supérieur, accouplés à une tige à commande manuelle.

Cette tige à commande manuelle est installée coulissante et tourillonnante dans le couvercle afin que les opercules puissent être déplacés selon des mouvements verticaux, le long de l'axe de la tige et également selon des mouvements horizontaux orientés chacun en sens inverse, le long de l'axe des tubulures d'entrée et de sortie.

Le principe général de fonctionnement de ces vannes, à savoir que l'ouverture et la fermeture des tubulures sont commandées par deux opercules appuyés sur leurs sièges respectifs au moyen d'excentriques accouplés à une tige à commande manuelle, a déjà été employé dans le mécanisme de fonctionnement de différentes vannes.

Une première vanne utilisant ce principe a été décrite et représentée dans le brevet français n°596.726 du 15 avril 1925. Celle-ci est particulièrement indiquée pour réguler l'écoulement des fluides sous de hautes pressions ou sous forme de vapeur et nécessite pour sa réalisation l'adoption d'un mécanisme de commande très résistant aux efforts de poussée subis par les opercules. Cette vanne rudimentaire est peu maniable et son coût est élevé en raison du matériau (fonte) dans lequel elle est fabriquée.

Le brevet belge n°354.959 décrit une vanne dont la montée et la descente de la tige de commande portant les excentriques s'opèrent au moyen d'une douille filetée dans laquelle évolue la tige également filetée à cet effet. Cette vanne est plus particulièrement destinée à une commande motorisée et s'avère, de par la complexité de son mécanisme interne (double séquence d'ouverture), d'un prix de revient élevé.

Une troisième vanne plus récente, proposée dans le brevet français n°2.393.730, a permis d'alléger le poids des précédentes et de simplifier leur mécanisme de fonctionnement. Toutefois, divers problèmes dus notamment à une trop grande liberté des pièces en mouvement, en ont fait un produit peu fiable, ayant fait une brève apparition sur le marché.

La vanne, objet de la présente invention, résulte du bilan des constatations relevées sur les vannes évoquées ci-dessus. Comportant de manière connue un corps creux constitué par un fût de préférence de section rectangulaire, deux tubulures alignées d'entrée et de sortie du fluide et un obturateur mobile comportant au moins un opercule monté en libre rotation autour de deux excentriques inférieur et supérieur, accouplés à une tige à commande manuelle, la vanne suivant l'invention est remarquable en ce que la partie inférieure de la susdite tige à commande manuelle est montée tourillonnante et coulissante au centre d'un palier-support constitué d'une pièce s'étendant en travers du fût, perpendiculairement à l'axe des tubulures d'entrée et de sortie ménagées dans les parois formant les côtés longitudinaux du rectangle dessinant les contours dudit fût.

La présence de ce palier-support, dont les principales dispositions relatives à son installation à l'intérieur du corps de la vanne seront décrites un peu plus loin, offre ainsi le grand avantage de guider convenablement les évolutions de la tige à commande manuelle à l'intérieur du fût.

Selon une caractéristique particulièrement avantageuse de l'invention, le plateau formant le susdit opercule est de forme rectangulaire et la largeur des susdites parois longitudinales du fût est sensiblement supérieure à celle du rectangle du plateau. Ainsi une paroi longitudinale, qui est bordée par les deux parois latérales pliées à angle droit, définit pour l'opercule obturant la tubulure ménagée dans ladite paroi une glissière verticale profilée en C dans laquelle il est guidé dans ses mouvements horizontaux et verticaux.

Selon une autre caractéristique particulièrement avantageuse de l'invention, le susdit palier-support adopte la forme d'un parallélépipède rectangle et est disposé entre les deux excentriques solidaires de la susdite tige à commande manuelle. Cette disposition et cette forme originales de la pièce constituant le palier-support permettent de limiter l'expansion angulaire de l'opercule autour des excentriques et renforcent ainsi sa stabilité lors de ses mouvements horizontaux et verticaux.

D'autres caractéristiques et d'autres avantages de la présente invention seront mieux compris à la lecture de la description qui suit de deux exemples de réalisation conformes à l'invention, correspondant le premier à une vanne à deux opercules et le deuxième à une vanne à un seul opercule. Ces deux exemples sont donnés à titre non limitatif et sont décrits en se référant aux dessins annexés sur lesquels :

La figure 1 est une vue en perspective éclatée d'une vanne dont l'obturateur mobile comporte deux opercules.

La figure 2 est une vue en coupe verticale d'une vanne dont l'obturateur mobile comporte un opercule.

La figure 3 est une vue en coupe longitudinale de la vanne de la figure 2.

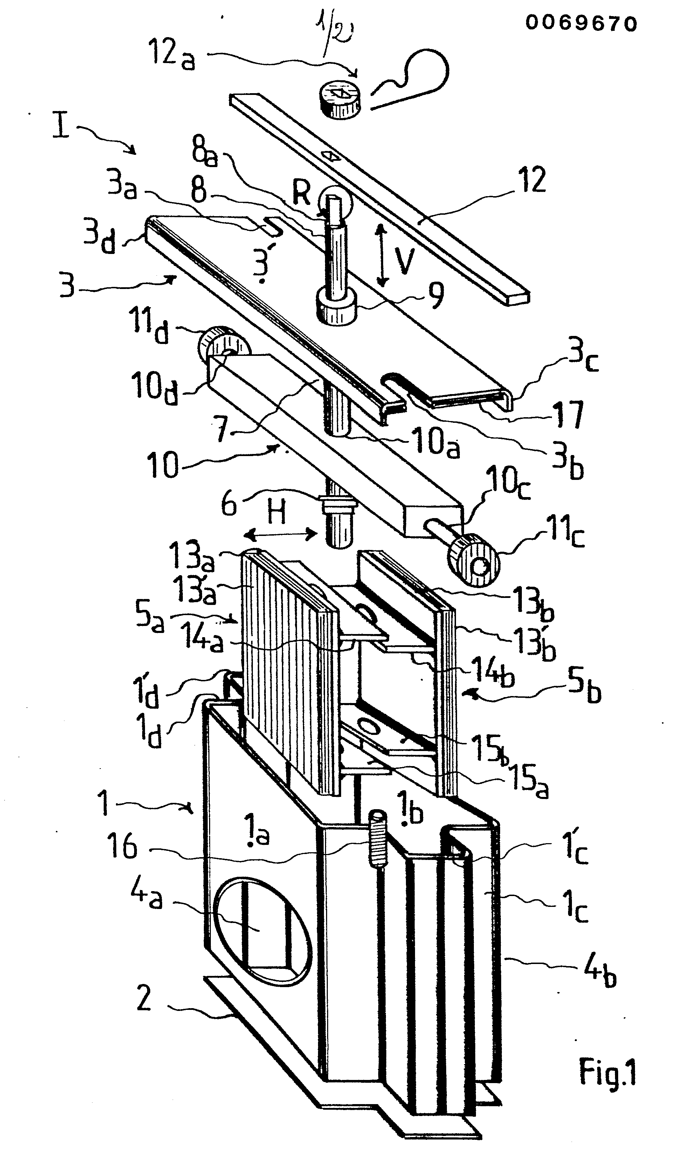

En se reportant au dessin de la figure 1, la vanne référencée I dans son ensemble comprend :

- un corps constitué d'un fût 1 fermé à sa base par un fond 2 et à son sommet par un couvercle 3,

- une tubulure d'entrée 4a et une tubulure de sortie (non représentée) 4b, ménagées dans les parois 1a et 1b du fût 1, dans le prolongement l'une de l'autre,

- et un obturateur mobile comportant deux opercules 5a et 5b montés en libre rotation autour de deux excentriques inférieur 6 et supérieur (non représenté) 7, accouplés solidairement à une tige à commande manuelle 8.

Cette dernière est montée coulissante (flèche V) et tourillonnante (flèche R) d'une part, à sa partie haute, au centre du couvercle 3 au moyen d'un manchon 9 équipé d'un joint torique d'étanchéité et solidaire de la plaque rectangulaire dudit couvercle et d'autre part, à sa partie basse, au centre d'un palier-support 10 formé d'une pièce parallèlépipédique s'étendant entre les parois latérales 1c et 1d du fût et disposée entre les deux excentriques 6 et 7.

Ce palier-support 10, percé en son centre d'un orifice 10a autorisant les évolutions H et V de la tige 8, est muni à ses deux extrémités de deux embouts cylindriques 10c et 10d porteurs de galets de roulement 11c et 11d. Ces deux derniers évoluent librement à l'intérieur de deux glissières verticales 1'c et 1'd profilées en C au milieu des parois latérales 1c et 1d du fût et guident ainsi les déplacements V du palier-support 10.

Les mouvements de rotation R et de translation verticale V de la tige 8 à l'intérieur du manchon 9 et de l'orifice 10a sont commandés manuellement par une poignée 12 associée, de manière amovible et au moyen d'un système de goupille 12a, à l'extrémité extérieure de la tige préformée selon un embout 8a destiné à recevoir ladite poignée.

0069670

Les deux opercules 5a et 5b sont constitués par des plateaux rectangulaires 13a et 13b revêtus sur leur face tournée vers les tubulures 4a et 4b d'une épaisseur de matériau étanche 13'a et 13'b venant prendre appui sur les sièges préforés autour desdites tubulures. Ces sièges pourront être réalisés soit par un rebord interne des tubulures soit par l'extrémité saillante des deux segments de conduite non représentés et venant s'emmancher à l'intérieur desdites tubulures par des moyens de fixation appropriés (soudure, brides, etc...).

La face opposée des opercules 5a et 5b comporte deux chapes 14a, 15a et 14b, 15b, dressées perpendiculairement et percées chacune d'un orifice servant de logement aux excentriques 6 et 7. Ces derniers sont avantageusement constitués de deux disques excentrés s'introduisant l'un et l'autre dans les deux orifices des chapes se superposant.

Ainsi, l'ensemble - excentriques 6 et 7, et orifices des chapes 14a, 15a, 14b, 15b - permet de transformer le mouvement de rotation R de la tige 8 en un mouvement horizontal alternatif rectiligne (flèche H) qui sera suivi, en direction opposée, par chacune des chapes et des opercules 5a et 5b associés.

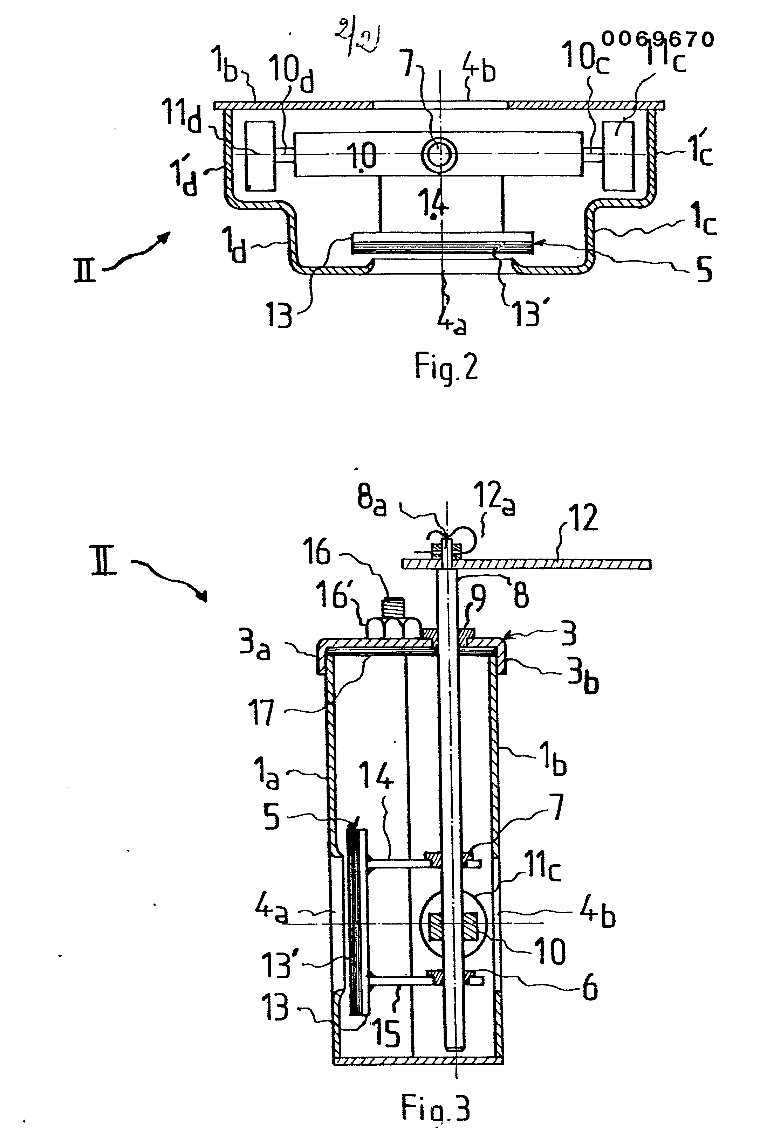

Le couvercle 3 est constitué d'une plaque rectangulaire 3' dont les bords longitudinaux 3a et 3b sont pliés à angle droit pour recouvrir la partie supérieure des parois la et lb du fût 1. Ces bords latéraux sont pourvus chacun d'une découpe 3c et 3d autorisant le passage de tiges filetées verticales en saillie 16 fixées en correspondance sur l'extérieur des parois lc et ld du fût 1 afin de bloquer, sur le sommet de ce dernier et au moyen d'écrous appropriés (référencés 16' à la figure 3), le couvercle 3 recouvert sur la face interne de sa plaque 3' d'une épaisseur de matériau 17 étanche au fluide circulant à l'intérieur de la vanne I.

Cette disposition permet, une fois la vanne I fixée par ses deux tubulures 4a et 4b aux deux segments d'arrivée et de sortie de la conduite de fluide dont elle assure la régulation de l'écoulement, la pose et la dépose du couvercle 3 ainsi que celles du mécanisme intérieur à des fins de remplacement d'une éventuelle pièce défectueuse ou simplement défaillante.

Le fonctionnement de la vanne I qui vient d'être ci-dessus décrite et représentée est le suivant.

Pour fermer l'ouverture des tubulures 4a et 4b, son utilisateur manoeuvre la poignée 12 de manière à entraîner la rotation R de la tige 8 et des excentriques 6 et 7. Ces derniers provoquent alors un déplacement horizontal H des opercules 5a et 5b en direction des tubulures 4a et 4b respectivement et obturent leurs ouvertures en plaquant le matériau étanche recouvrant les plaques 13a et 13b sur les sièges entourant lesdites tubulures.

Pour obtenir maintenant une ouverture partielle ou totale de ces tubulures, l'utilisateur fait exécuter à la poignée 12 :

- dans un premier temps, un mouvement de rotation R inversée, ramenant ainsi les opercules 5a et 5b l'un vers l'autre en direction du palier-support 10,

- dans un deuxième temps, un déplacement vertical V ascendant pour dégager partiellement ou en totalité l'ouverture des tubulures 4a et 4b,

- et dans un troisième et dernier temps, un mouvement de rotation R pour que les matériaux étanches des plaques 13a et 13b viennent se plaquer contre les parois internes 1a et 1b du fût 1.

La vanne I offre de nombreux avantages et parmi ceux-ci :

- un faible coût et un poids peu élevé car elle peut être fabriquée en acier pour le corps et en acier inoxydable pour les pièces du mécanisme intérieur (opercules, tige de commande, palier-support),

- un fonctionnement en vide grâce à la présence du palier-support 10 et des glissières verticales 1'c et 1'd,

- une adaptation simple et rapide sur la conduite d'écoulement de fluide,

- et une double étanchéité par la présence des deux opercules 5a et 5b, qui permet à la vanne I de fonctionner même lorsque l'un des deux est défaillant.

La vanne II représentée en coupe sur les dessins des figures 2 et 3 permet de réduire le coût de la vanne I notamment lorsqu'elle est destinée à assurer le réglage et l'isolement des écoulements de fluide à basse pression.

Les organes identiques à ceux de la vanne I portent les mêmes références numériques et ne seront pas détaillés ci-après puisqu'ils assurent chacun la même fonction.

L'originalité de la vanne II réside essentiellement dans le fait qu'elle ne comprend qu'un seul opercule 5 assurant l'ouverture et la fermeture de la tubulure d'entrée 4a.

A cet effet et pour des impératifs de fabrication simplifiée, les glissières verticales en C 1'c et 1'd sont profilées chacune aux extrémités des parois latérales 1c et 1d du fût 1, mitoyennes avec celles de la paroi longitudinale 1b portant la tubulure de sortie 4b.

L'assemblage, le montage et l'entretien des vannes I et II sont simples. Celles-ci sont particulièrement indiquées pour des fabrications en série d'une certaine importance sans que pour autant la liberté d'agencement des différentes pièces ne soit restreinte.

REVENDICATIONS

0069670

1. Organe de réglage et d'isolement des écoulements de fluide en conduite, comprenant :

- un corps creux constitué d'un fût (1) de section rectangulaire, fermé à sa base par un fond (2) et à son sommet par un couvercle (3),

- une tubulure (4a) d'entrée et une tubulure de sortie (4b) formant sièges et ménagées dans les parois longitudinales (4a et 4b) dudit fût, dans le prolongement l'une de l'autre,

- et un obturateur mobile comportant au moins un opercule (5a et 5b) constitué d'un plateau monté en libre rotation autour de deux excentriques inférieur (6) et supérieur (7), accouplés à une tige à commande manuelle (8), laquelle est montée coulissante (flèche V) et tourillonnante (flèche R) dans ledit couvercle pour autoriser des déplacements verticaux (V) de l'opercule (5a ou 5b) le long de l'axe de la tige (8) et horizontaux (H) le long de l'axe desdites tubulures, ledit organe étant CARACTERISE PAR LE FAIT QUE la partie inférieure de la tige à commande manuelle (8) est montée tourillonnante au centre d'un palier-support (10) constitué d'une pièce s'étendant en travers du fût (1), perpendiculairement à l'axe des susdites tubulures (4a et 4b) de ce dernier.

2. Organe selon la revendication 1, CARACTERISE PAR LE FAIT QUE le susdit palier-support (10) adopte la forme d'un parallélépipède rectangle et est disposé entre les deux excentriques (6 et 7) solidaires de la susdite tige à commande manuelle (8).

3. Organe selon la revendication 1, CARACTERISE PAR LE FAIT QUE les embouts (10c et 10d) dudit palier-support (10) sont montés coulissants à l'intérieur de deux glissières verticales (1'c et 1'd) en regard et préformées selon des profilés en C dans les parois latérales (1c et 1d) dudit fût.

4. Organe selon la revendication 1, CARACTERISE PAR LE FAIT QUE le plateau du susdit opercule (5a ou 5b) est de forme rectangulaire et PAR LE FAIT QUE la largeur des susdites parois longitudinales (1a et 1b) est sensiblement supérieure à celle du rectangle du plateau (5a ou 5b).

5. Organe selon la revendication 1, CARACTERISE PAR LE FAIT QUE le susdit couvercle (3) est amovible et est constitué d'une plaque rectangulaire (3') dont les bords longitudinaux (3a et 3b) sont pliés à angle droit pour recouvrir la partie supérieure des parois longitudinales (1a et 1b) du fût (1) et dont les bords latéraux sont pourvus d'une découpe (3c et 3d) autorisant le passage de tiges filetées verticales en saillie (16) qui, fixées sur l'extérieur des parois latérales (1c et 1d) du fût (1), sont destinées, au moyen d'écrous appropriés (16'), à bloquer sur le sommet dudit fût le couvercle (3) recouvert sur sa face interne d'une épaisseur de matériau étanche

6. Organe selon la revendication 1, CARACTERISE PAR LE FAIT QUE la partie supérieure de la tige à commande manuelle (8) traverse la plaque (3') du susdit couvercle (3) au moyen d'un manchon (9) équipé d'un joint torique et est munie à son extrémité extérieure d'un embout (8a) préformé pour recevoir un moyen de commande manuelle (12).

7. Organe selon les revendications 1 et 2, CARACTERISE PAR LE FAIT QUE le susdit palier-support (10) est monté coulissant le long de la susdite tige à commande manuelle (8).

8. Organe selon les revendications 1 à 3, CARACTERISE PAR LE FAIT QUE les embouts (10c et 10d) du susdit palier-support (10) sont munis de galets de roulement (11c et 11d).

9. Organe selon les revendications 1 à 8 prises ensemble, CARACTERISE PAR LE FAIT QUE l'obturateur mobile comporte deux opercules (5a et 5b) parallèles, associés aux deux excentriques (6 et 7) accouplés à la tige à commande manuelle (8) de manière à autoriser les déplacements horizontaux (flèches à double sens H), des susdits opercules simultanément et en sens inverse, et PAR LE FAIT QUE d'une part, les deux glissières (1'c et 1'd) verticales en C sont profilées chacune au centre des parois latérales (1c et 1d) dudit fût (1) et d'autre part, les excentriques (6 et 7) sont constitués chacun de deux disques excentrés superposés.

10. Organe selon les revendications 1 à 8 prises ensemble, CARACTERISE PAR LE FAIT QUE l'obturateur mobile comporte un seul opercule (5) obturant la tubulure d'entrée (4a), et PAR LE FAIT QUE les deux glissières verticales (1'c et 1'd) en C sont profilées chacune aux extrémités des parois latérales (1c et 1d) dudit fût (1), mitoyennes avec celles de la paroi longitudinale (1b) portant la tubulure de sortie (4b) non obturée.

0069670

Fig.1

0069670

Fig.2

Fig.3

**0069670**

Numéro de la demande

Office européen
des brevets

**RAPPORT DE RECHERCHE EUROPEENNE**

EP   82  40  1261

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-C- 630 742 (K. KARNATH) | | F 16 K 3/18 <br> F 16 K 3/316 |
| A | DE-C- 467 153 (K. KARNATH) | | |
| A | FR-A-2 053 800 (CENTRE DE RECHERCHES DE PONT-A-MOUSSON) | | |
| A | US-A-4 132 385 (COASTAL CULVERT & SUPPLY, INC.) | | |
| A | US-A-2 652 946 (G.M. BEATTY) | | |

|  | DOMAINES TECHNIQUES RECHERCHES (Int. Cl. ³) |
|---|---|
|  | F 16 K 3/00 <br> F 16 K 31/00 <br> F 16 K 51/00 |

Le présent rapport de recherche a été établi pour toutes les revendications

| Lieu de la recherche | Date d'achèvement de la recherche | Examinateur |
|---|---|---|
| LA HAYE | 12-10-1982 | DE SMET F.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82